# EUROPEAN PATENT SPECIFICATION

(11) **EP 0 364 968 B1**
(45) Date of publication and mention of the grant of the patent: **08.06.1994**
(21) Application number: 89119284.1
(22) Date of filing: 17.10.1989
(51) Int. Cl.: G02F 1/09

(54) **Optical isolator**
Optischer Isolator
Isolateur optique

(30) Priority: 18.10.1988 JP 261740/88
(43) Date of publication of application: 25.04.1990
(73) Proprietor: HITACHI METALS, LTD., Chiyoda-ku, Tokyo 100 (JP)
(72) Inventor: Makio, Satoshi, Kumagaya-shi Saitama (JP); Sakakihara, Masahiko, Kumagaya-shi Saitama (JP); Nakada, Tsumoru, Kuwana-shi Mie (JP); Takeda, Shigeru, Kumagaya-shi Saitama (JP)
(74) Representative: Strehl Schübel-Hopf Groening & Partner

(56) References cited:
- EP-A- 0 251 718
- EP-A- 0 279 412
- JP-A- 1 185 518
- JP-A-63 200 117
- PATENT ABSTRACTS OF JAPAN, vol. 10, no. 282 (P-500)[2338], 25th September 1986; & JP-A-61 102 616
- PATENT ABSTRACTS OF JAPAN, vol. 10, no. 223 (P-485)[2279], 5th August 1986; & JP-A-61 57 922

## Description

This invention relates to optical isolators to be incorporated in a high speed and big capacity optical communication system, or optical isolators to be used for a basic study for the optical communication system.

Recently research, development and commercialization of higher speed and bigger capacity communication systems incorporating optical fibers are conducted on the basis of remarkable progress of optical fibers.

Semiconductor lasers emitting light of narrow width spectral line are commonly used as light sources in such communication systems.

When light generated by a high efficiency semiconductor laser is transmitted through an optical fiber, a reflection of light takes place due to a dispersion of the light inside the optical fiber, local nonuniformity of the refractive index of the optical fiber, the connection of the optical fibers and the like in such a high speed and big capacity communication system, and the reflected light may propagate backward along the optical path and finally recombine with the semiconductor laser. Under such conditions, the oscillation of the semiconductor laser becomes unstable, which results in an undesirable increase in noise in the generated light. Optical isolators should be effectively used to suppress such reflected light.

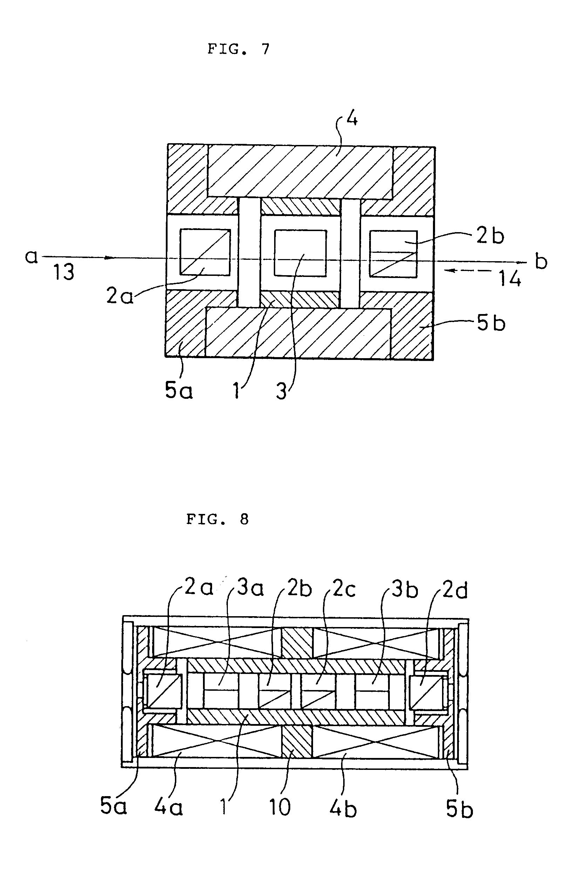

Fig. 7 illustrates the structure of a conventional optical isolator. The light beam 13 coming from a point "a" in Fig. 7 is transmitted into a first beam splitter 2a serving as a polarizer and a separator.

The polarizer 2a selectively permits the light polarized in a certain direction, e.g. the vertically polarized light, to pass therethrough.

The light passed through the polarizer 2a is then transmitted into a Faraday rotor 3 which is constituted by a single crystal of a material such as YIG(an oxide cotaining Y₂O₃, Fe₂O₃ as major components), and passes through the Faraday rotator 3 with its direction of polarization rotated by 45°.

The Faraday rotator 3 is usually placed in a center space of a cylindrical magnet 4 magnetized in a direction substantially parallel with the optical path as shown in Fig. 7.

The light passed through the Faraday rotator 3 goes into a second beam splitter 2b serving as an analyzer, whose polarization angle is deviated by 45° from a vertical direction.

Consequently, the light exiting from the Faraday rotator 3 can pass through the analyzer 2b without further changing its plane of polarization.

Therefore, if an end of an optical fiber is placed at point "b", the light coming from point "a" can be introduced into the optical fiber. In the device, the Faraday rotator 3 and the polarizers 2a and 2b are respectively supported by a center holder 1 and rotational holders 5a and 5b.

On the other hand, the light 14(dotted line) reflected in the optical fiber, etc. is transmitted from point "b" into the second beam splitter 2b.

The component of the reflected light polarized in the same direction as the polarization direction of polarizer 2b passes through the polarizer 2b and goes into the Faraday rotator 3. As is well known, the Faraday rotator 3 changes the plane of polarization of light passing through it, depending upon the angle of the incident light relative to the direction of magnetization of the Faraday rotator. Since the light is rotated by 45° in the same direction as the incident light in the arrangement shown in Fig. 7, the resultant direction of polization of the light exiting leftward from the Faraday rotator 3 is perpendicular to the direction in which the first beam splitter 2a, which functions as an analyzer this time, permits light to pass. Hence, the reflected light propagating backward from the Faraday rotator 3 toward the semiconductor laser located at point "a" is blocked by the analyzer 2a, thereby preventing a decrease of the S/N ratio of the semiconductor laser, which would otherwise be caused by the recombination of the reflected light within the semiconductor laser.

An optical isolator with the features included in the first part of claim 1 is known from EP-A-0 279 412. The known device comprises two sets of Faraday rotators where an extremely high loss in reverse or backward direction of the optical isolator can be attained. A similar type of optical isolator is disclosed in JP-A-63-5318.

Referring to a multi-stage optical isolator, Fig. 8 illustrates the structure of a two-stage optical isolator, in which two cylindrical magnets 4a, 4b having the same length but magnetized in opposite directions are coaxially arranged with their S poles opposing each other with a certain distance. Beam splitters 2a, 2b, 2c and 2d which can serve as both polarizers and analyzers are arranged as shown in Fig. 8. Beam splitter 2a on the incident beam side and beam splitter 2d on the exit beam side are arranged such that their planes of polarization are oriented in the same direction, i.e. at 0°.

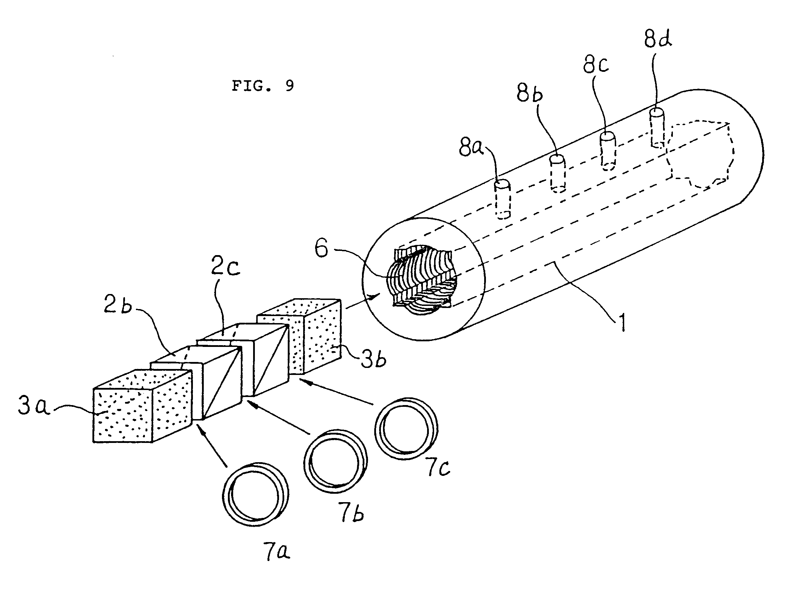

The beam splitters 2b and 2c between two Faraday rotators 3a and 3b respectively have a direction of polarization of 45°. With this construction, the light beam entering into this optical isolator through the beam entrance is rotated by 45° by Faraday rotator 3a, passes through beam splitters 2b and 2c serving as analyzers having a polarization angle inclined by 45°, and goes into the second Faraday rotator 3b, through which the plane of polarization of the light beam is rotated by 45° in the opposite direction because of the opposite direction of magnetization of the rotator 3b. The holder 1 supports polarizers 2b and 2c and Faraday rotators 3a and 3b. Rotatable holders 5a and 5b respectively support the polarizer 2a and the polarizer 2d and serve to adjust the polarizers' location. In this configuration the light recovers its initial direction of polization which it had at the entrance point. Thus, it passes through analyzer 2d directed substantially 0°. Fig. 9 is to explain an example of the process to make up a multi-stage optical isolator as above stated. Two Faraday rotators 3a and 3b and two polarizers 2b and 2c should be inserted into the hole 6 of the center holder 1 along the direction shown by an arrow from the end holder 1. Spacers 7a, 7b and 7c are necessary to prevent contacts between the Faraday rotator 3a and the polarizer 2b, the polarizer 2b and the polarizer 2c, and the polarizer 2c and the Faraday rotator 3b. The holes 8a, 8b, 8c and 8d are also necessary to insert bonding material in order to fix the components by bonding material in the structure as shown in Fig 9. In this configuration it is dfficult to watch or confirm the bonding material to adhere to side walls of the components. It is also hard to confirm the planned straight alignment of all the components in the holder 1 with respect to the optical axis. The difficulty sometimes causes instability of the high isolation loss of reverse beam in the produced optical isolators.

EP-A-0 251 718 discloses a holder for supporting optical elements in alignment with their optical axis, the holder having a lateral opening extending parallel to the axis for insertion of the optical elements.

### SUMMARY OF THE INVENTION

It is an object of the present invention to provide an optical isolator with improved optical characteristics.

This object is met by the optical isolator defined in claim 1. Since the lateral opening is formed so that light separated by the polarizers can freely escape from the isolator, the invention prevents reflections of the separated light back to the optical path where it would impair the characteristics of the isolator.

### BRIEF DESCRIPTION OF THE DRAWINGS

Fig. 1 is a perspective view of an optical isolator;
Fig. 2 is a perspective view of another embodiment of the present invention;
Fig. 3 is a perspective view of other example of the present invention;
Fig. 4 is a perspective view of a magnet spacer to be incorporated in the present invention;
Fig. 5 is a perspective view of rotatable holders to be incorporated with the present invention;
Fig. 6 is a perspective view of another embodiment of the present invention;
Fig. 7 is a cross-sectional view of a conventional optical isolator;
Fig. 8 is a cross-sectional view of a prior optical isolator wherein two sets of isolators are integrated;
Fig. 9 is a perspective view to show the construction of an optical isolator as shown in FIg. 8.

### DESCRIPTION OF THE PREFERRED EMBODIMENTS

The following is an explanation in detail of embodiments of the invention, but the invention is not restricted by the embodiments.

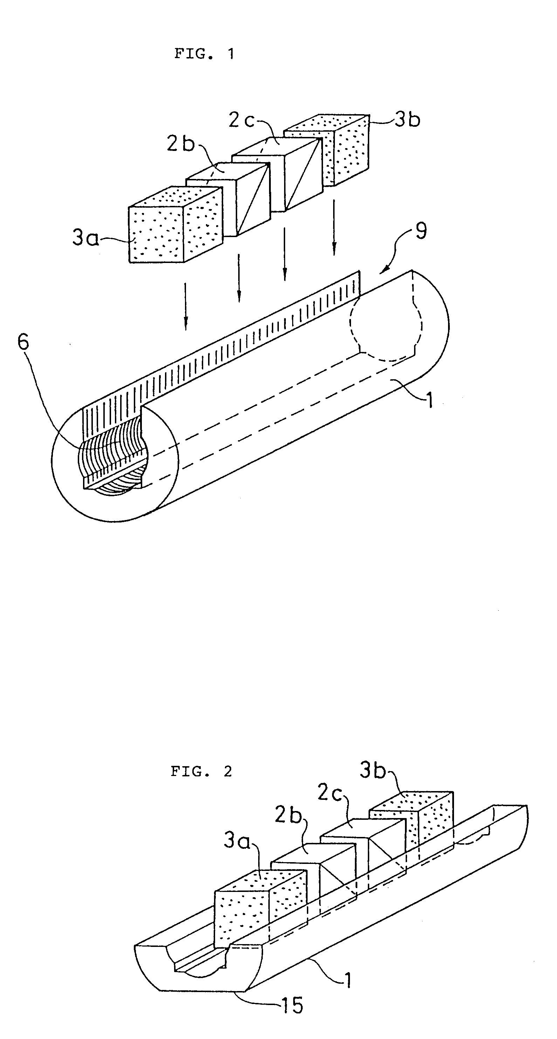

Fig. 1 is a schematic view showing a center holder, Faraday rotators and polarizers to be incorporated in an optical isolator according to the present invention, which is an improvement of a prior art where two Faraday rotators are aligned along the optical axis as shown in Fig. 9.

As understood from Fig. 1, Faraday rotators 3a, 3b and the polarizers 2b, 2c between the Faraday rotators can be inserted into a center holder through an opening 9 of the center holder 1, and fixed by binding material in the center holder 1 after a location adjustment using a stereomicroscope. The opening 9 is a bit wider than the Faraday rotators and the polarizers so that they can be inserted through the opening 9.

It is easy to make and fix an angle of less than 1 degree between a plane perpendicular to the optical axis and each surface of the Faraday rotators 3a, 3b and polarizers 2b, 2c through which the light passes in the center holder 1.

In a prior art as shown in Fig. 9, Faraday rotators 3a, 3b and polarizers 2b, 2c were inserted into a center holder 1 along the optical axis through openings located at the ends 6 of the center holder and fixed by binding material injected through holes 8a, 8b, 8c and 8d. In contrast to the prior art, it is much easier and more accurate to fix these Faraday rotators and polarizers in the center holder according to the above embodiment.

Another example of a center holder 1 of an optical isolator according to the present invention is shown in Fig. 2, where the center holder 1 has a form of a cut shape at its upper side.

The most essential role of the center holder is to fix firmly these Faraday rotators 3a, 3b and polarizers 2b, 2c at predetermined positions relative to the optical axis. It is possible to insert and locate these Faraday rotators 3a, 3b and polarizers 2b, 2c at the desired positions in a much easier way than that in Fig. 1.

As the outer peripheral surface of a center holder is generally coincident with an inner surface of a ring shape of permanent magnet as shown in Fig. 7 and Fig. 8 in order that the center holder supports the permanent magnet too, it is preferable to make the outer peripheral surface of the center holder almost coincident with the inner surface of a ring shape of permanent magnet.

Although it is not absolutely necessary to bond the outer surface of the center holder to the inner surface of a permanent magnet as these surfaces are annular and almost coincident, as shown in Fig. 1, the permanent magnet will be fixed to the outer side of the holder by binding material in case of a center holder 1 having a shape as shown in Fig. 2, because this holder is incomplete to support the magnet firmly without the binding material.

The flat portion 15 formed on the center holder 1 as shown in Fig. 2 prevents the center holder 1 from moving during operations of placing the Faraday rotators 3a, 3b and the polarizers 2b, 2c, and makes the operations easy.

The same idea can be applied to the center holder shown in Fig. 1.

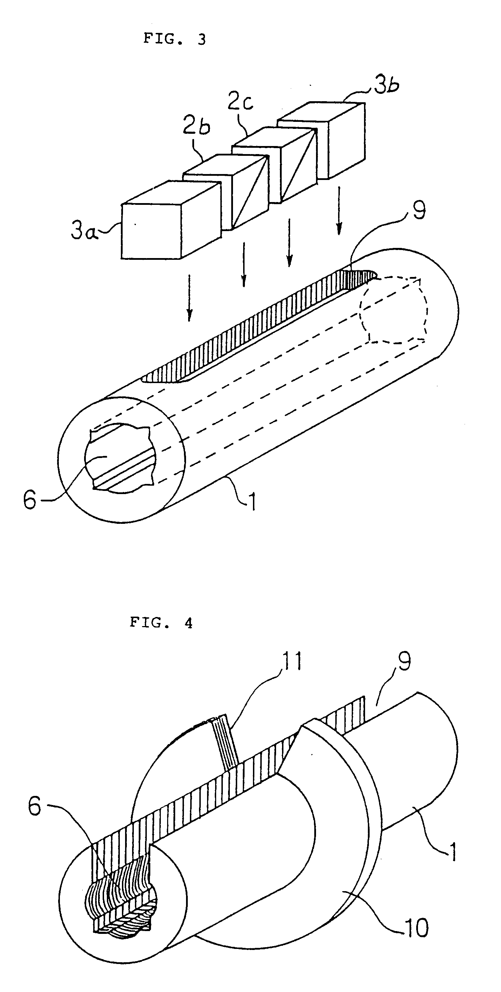

Another example of a center holder to be incorporated in an optical isolator according to the present invention is shown in Fig. 3. The opening 9 is a hole through which Faraday rotators 3a, 3b and polarizers 2b, 2c can be inserted into the hollow portion 6 of the center holder 1 as shown in Fig. 3; the opening 9 is similar to the slit as shown in Fig. 1.

The shape of the center holder 1 makes it much stronger than the one shown in Fig. 1, and the strength of the center holder 1 is comparable with that in the prior art shown in Fig. 9.

Fig. 4 is to show another construction of an optical isolator according to the present invention. A spacer 10 for permanent magnets is fixed at a center of a center holder 1. A cut portion 11 of the spacer 10 of outwardly increasing width is aligned with the opening 9 of the center holder 1.

The spacer 11 makes the location and adjustment of permanent magnets easier without causing any trouble for insertion and adjustment of Faraday rotators and polarizers.

The outwardly increasing width of the spacer cut-out makes the insertion of polarizers 2b, 2c much easier.

The spacer 10 can be integrated in a body with the center holder 1, so that a location adjustment of the spacer is not necessary.

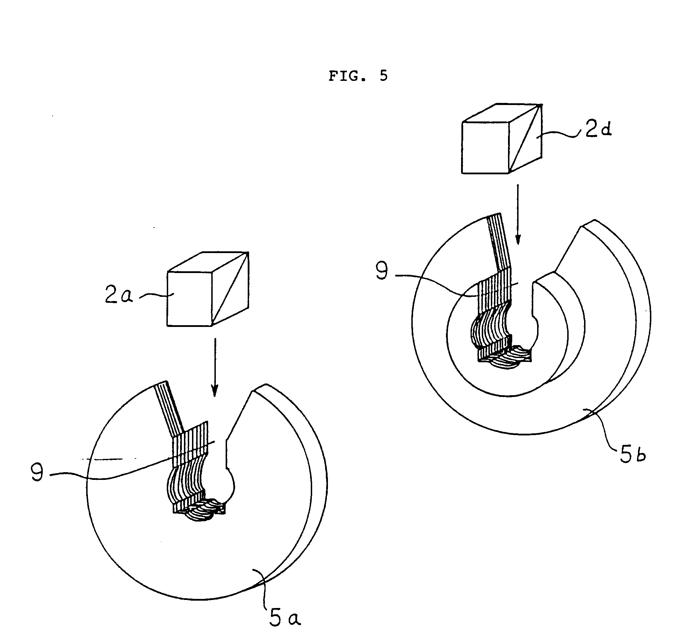

Fig. 5 shows rotational holders 5a, 5b formed in a similar shape as the spacer 10 in Fig. 4. They are to be located at the both ends of an optical isolator.

In the construction of the rotatable holder as shown in Fig. 5, the polarizers 2a and 2d can be inserted through the cut portion and can be watched, set and accurately adjusted easily.

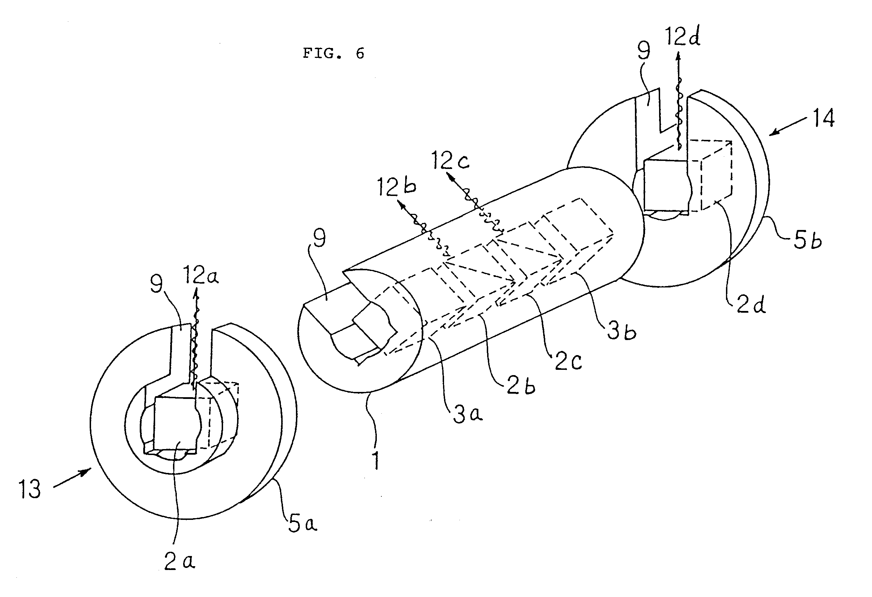

We explain other examples of the present invention with reference to Fig. 6.

In Fig. 6, the arrow 13 shows the ordinary direction for light to pass through in the optical isolator according to the present invention where two Faraday rotators are provided. A reflected light 14 coming back in a reverse direction is partially separated out as separated light 12d by a polarizer 2d.

Almost all of reflected light which remained and passed through the polarizer 2d can be separated by the polarizer 2c as separated light 12b because of enforced rotation of its plane of polarization by the Faraday rotator 3b. Moreover some part of reflected light which remained and passed through the polarizer 2c can be separated out as separated light 12c by the polarizer 2b.

Reflected light which remained and passed through the polarizer 2b can be rotated with its plane of polarization by the Faraday rotator 3a and separated out as a separated light 12a by the polarizer 2a.

Although an optical isolator having an isolation loss of 60dB or more can be achieved by the process as stated above; the treatment of the separated lights 12a, 12b, 12c and 12d is important to confirm the excellent characteristics of such an optical isolator incorporated with two Faraday rotators.

For example, some of the separated light going in a direction perpendicular to the optical axis happens to come back into the light way in the isolator again, if there is something such as a side wall of a holder to reflect the separated lights 12a, 12b, 12c and 12d in their propagating directions.

Such phenomenon is inconvenient to confirm the excellent characteristics of such an optical isolator incorporated with two Faraday rotators.

We produced a duplex type of optical isolator having a center holder whose opening 9 is coincident with the propagating direction of the separated lights 12b and 12c in Fig. 1 and rotatable holders whose openings 9 are coincident with the propagating direction of the separated light 12a and 12d, because the probability for separated light to come back into the optical path is reduced largely as any reflecting objects are farther removed from the isolator, if the openings are coincident with the propagation directions of the separated ligths.

Cylindrical shape of permanent magnets is set as shown in Fig. 8 on the outer surface of the center holder, similar to Fig. 6.

By making the openings coincident with the propagating directions of the separated lights, the isolation loss can easily be made as large as 70 dB or more in a duplex structure of isolator according to the invention, whereas it is rather difficult to provide an isolation loss of 60dB or more by an isolator without such openings.

It is possible to enhance the isolation loss of the isolator by applying material to absorb light on the inner surface of the magnets on the center holder as shown in Fig. 6.

## Claims

1. An optical isolator for allowing light propagation in one direction and separating any light reflected in the reverse direction, the isolator comprising
a cylindrical magnet (4) magnetized parallel to its axis,
at least one Faraday rotator (3a, 3b) disposed in a center space of the cylindrical magnet (4), and
a pair of polarizers (2a ... 2d) associated with the or each Faraday rotator (3a, 3b) and having an angle of 45° between their polarization planes, the polarizers being arranged along said axis with one on either side of the associated Faraday rotator,
characterised in that the Faraday rotator(s) (3a, 3b) and polarizers (2a ... 2d) are supported by at least one central holder (1) having a lateral opening (9) for inserting the Faraday rotator(s) and polarizers, the opening (9) extending parallel to said axis and being formed so that light separated by the polarizers can freely escape from the isolator.

2. The optical isolator of claim 1, wherein either one of the polarizers (2a, 2d) located in the end portions of the isolator is supported by its own holder (5a, 5b) having a lateral opening (9) for inserting the polarizer.

3. The optical isolator of claim 1, including a spacer (10) of non-magnetic material and surrounding the outer surface of the central holder (1) for separating juxtaposed permanent magnets (4a, 4b), the spacer having a notch (11) aligned with the opening (9) of the central holder.

## Patentansprüche

1. Optischer Isolator, der dazu dient, Lichtausbreitung in einer Richtung zu gestatten und etwaiges in Rückwärtsrichtung reflektiertes Licht abzutrennen, und folgende Merkmale aufweist:
einen parallel zu seiner Achse magnetisierten zylindrischen Magneten (4),
mindestens eine Faraday-Dreheinrichtung (3a, 3b), die in einem Mittelraum des zylindrischen Magneten (4) angeordnet ist, und
ein Paar von Polarisatoren (2a...2d), die der bzw. jeder Faraday-Dreheinrichtung (3a, 3b) zugeordnet sind und einen Winkel von 45° zwischen ihren Polarisationsebenen aufweisen, wobei die Polarisatoren längs der Achse angeordnet sind und sich einer auf jeder Seite der zugeordneten Faraday-Dreheinrichtung befindet,
dadurch **gekennzeichnet,** daß die Faraday-Dreheinrichtung(en) (3a, 3b) und die Polarisatoren (2a...2d) von mindestens einem mittigen Halter (1) getragen sind, der eine seitliche Öffnung (9) zum Einführen des bzw. der Faraday-Dreheinrichtung(en) und Polarisatoren aufweist, wobei sich die Öffnung (9) parallel zur genannten Achse erstreckt und so ausgebildet ist, daß von den Polarisatoren abgetrenntes Licht frei aus dem Isolator entweichen kann.

2. Optischer Isolator nach Anspruch 1, worin jeder der Polarisatoren (2a, 2d), der in den Endabschnitten des Isolators angeordnet ist, von seinem eigenen Halter (5a, 5b) getragen ist, der eine seitliche Öffnung (9) zum Einführen des Polarisators aufweist.

3. Optischer Isolator nach Anspruch 1 mit einem Distanzstück (10) aus nicht-magnetischem Material, das die Außenoberfläche des mittleren Halters (1) umgibt, um nebeneinanderliegende Permanentmagneten (4a, 4b) zu trennen, wobei das Distanzstück eine Kerbe (11) aufweist, die auf die Öffnung (9) des mittleren Halters ausgerichtet ist.

## Revendications

1. Isolateur optique permettant la propagation de la lumière dans une direction et séparant toute lumière réfléchie dans le sens inverse, comportant
un aimant cylindrique (4) magnétisé parallèlement à son axe,
au moins un rotateur de Faraday (3a, 3b) disposé dans un espace central de l'aimant cylindrique (4), et
une paire de polariseurs (2a...2d) associés au ou à chaque rotateur de Faraday (3a, 3b) et présentant un angle de 45° entre leurs plans de polarisation, les polariseurs étant disposés le long dudit axe de part et d'autre du rotateur de Faraday associé,
caractérisé en ce que le ou les rotateurs de Faraday (3a, 3b) et les polariseurs (2a...2d) sont supportés par au moins un support central (1) possédant une ouverture latérale (9) pour introduire le ou les rotateurs de Faraday et les polariseurs, l'ouverture (9) s'étendant parallèlement audit axe et étant formée de sorte que la lumière séparée par les polariseurs peut s'échapper librement de l'isolateur.

2. Isolateur optique selon la revendication 1, dans lequel chacun des polariseurs (2a...2d) situés aux parties terminales de l'isolateur est supporté par son propre support (5a, 5b) possédant une ouverture latérale (9) pour introduire le polariseur.

3. Isolateur optique selon la revendication 1, comprenant une entretoise (10) en matériau non magnétique et entourant la surface extérieure du support central (1) pour séparer des aimants permanents juxtaposés (4a, 4b), l'entretoise possédant une encoche (11) alignée sur l'ouverture (9) du support central.
